# EUROPEAN PATENT SPECIFICATION

(11) **EP 3 128 240 B1**
(45) Date of publication and mention of the grant of the patent: **21.02.2024**
(21) Application number: 16181824.0
(22) Date of filing: 29.07.2016
(51) Int. Cl.: F24C 3/12, F24C 7/08, F24C 15/20

(54) **HOUSEHOLD APPLIANCE SYSTEM AND HOUSEHOLD APPLIANCE**
HAUSHALTSGERÄTESYSTEM UND HAUSHALTSGERÄT
SYSTÈME D'APPAREIL MÉNAGER ET APPAREIL MÉNAGER

(30) Priority: 03.08.2015 CN 201510467036
(43) Date of publication of application: 08.02.2017
(73) Proprietor: BSH Hausgeräte GmbH, 81739 München (DE)
(72) Inventor: Schlotmann, Peter, 49219 Glandorf (DE)

(56) References cited:
- EP-A1- 1 742 144
- ES-T3- 2 356 261
- US-A1- 2007 222 760
- US-A1- 2013 187 781

## Description

The present invention relates to the field of household appliance systems and the field of household appliances.

For an existing household appliance, such as an electromagnetic cooker or a range hood, a touch control patter is generally set on a touch control position of a touch control apparatus of the household appliance, so that a user performs a corresponding touch control operation conveniently.

In addition, ES 2 356 261 T3 discloses a refrigerator or freezer apparatus. This household appliance comprises a projection apparatus, which is referred to as indicator device. The indicator device comprises a projector. This projector is used to project operating parameter on a projection surface. In addition a virtual actuating surface is projected onto the projection surface.

Furthermore, EP 1 742 144 A1 discloses a household appliance, which is provided with a virtual data interface. The appliance has operative means and a data interface generator in signal communication with said operative means and it is characterized in that said generator comprises illumination means for directing an illumination pattern on a projection surface thereby defining a data interface in form of image. The data interface is sensed by imaging sensor, which is provided at the generator.

US 2013/0187781 A1 discloses a range hood with features for monitoring the temperature of a cook top located below it is provided. In one example, the range hood includes one or more temperature sensors positioned over the cook top for measuring temperature of the heating elements below. If the measured temperatures(s) exceeds one or more predetermined temperature levels, either with or without a time delay, a notification and/or other remedial response is provided to a user of the appliance. The notification can be, for example, a visual warning projected onto the cook top and/or an audible alarm. Different warnings can be provided based on different temperature levels as measured by the temperature sensors.

US 2007/0222760 A1 discloses a data input device.

Unless supported by enough evidences, the prior art described here does not indicate recognition that the prior art is, before the priority date of the present invention, universally known to a person of ordinary skill in the art related to the present invention.

A main objective of the present invention is to provide new improvement in a household appliance system and a household appliance.

A household appliance provided in the present invention includes a projection apparatus, where the household appliance further includes a touch control module for touch control operation by the user and the projection apparatus is used to perform projection onto the touch control module and indicate, by using the projection, a touch control position corresponding to the touch control module. The touch control module includes a capacitive touch control apparatus, a resistive touch control apparatus, an infrared touch control apparatus or a surface acoustic wave touch control apparatus. The present invention provides a new indication solution for a touch control position of a household appliance.

Optionally, the touch control position is indicated only by using the projection. That is, when the projection apparatus is turned off, there is no indication sign on the touch control position; in this case, a user cannot identify the touch control position. In this way, a hiding effect of a human-machine interface in a non-working state of the household appliance can be improved.

Optionally, the touch control module is a unique unit of the household appliance that is used for a user to manually control the household appliance. In this way, the hiding effect of the human-machine interface in a non-working state of the household appliance can be further improved.

Optionally, the projection apparatus is used to project a corresponding touch control pattern onto the touch control position. Optionally, a color and/or pattern of the touch control pattern is set to be changeable. In this way, different needs of different users can be satisfied.

Optionally, the projection apparatus is disposed on another household appliance. Optionally, the projection apparatus is further used to project display information. In this way, the projection apparatus may also be used as a display apparatus of the household appliance. Optionally, the touch control module is in an off state when the projection apparatus is turned off; and the touch control module is in a working state when the projection apparatus is turned on. When the touch control module is in an off state, the household appliance makes no response even if a user touches the touch control position. When the touch control module is in a working state, a user can touch the touch control position to perform a corresponding touch control operation.

Optionally, the household appliance includes a panel, and the touch control position is on the panel; and the panel is in a single color when the projection apparatus is turned off. In this way, when the projection apparatus is turned off, there is no indication sign on the touch control position; in this case, a user cannot identify the touch control position. In this way, the hiding effect of the human-machine interface in a non-working state of the household appliance can be improved.

Optionally, the panel is in single black or white. Optionally, a color of the projection is set to be changeable. In this way, different needs of different users can be satisfied. Optionally, the projection apparatus includes a first position and a second position, and the projection apparatus may be switched between the first position and the second position by means of a pressing operation; when the projection apparatus is in the first position, the projection apparatus is embedded in the household appliance and the projection apparatus is turned off; and when the projection apparatus is in the second position, the projection apparatus at least partially extends out of the household appliance, performs projection onto the touch control module, and indicates, by using the projection, the touch control position corresponding to the touch control module. Optionally, the household appliance includes any one of the following: an electromagnetic cooker, a gas stove, a pneumatic-electric combination stove, a range hood, an oven, a steam oven, a dishwasher, a water heater, a coffee machine, a refrigerator, and a washing machine. The "pneumatic-electric combination stove" may be construed as a combination cooktop having both a gas stove unit and an electromagnetic cooker unit. The present invention further provides a household appliance system, including a fume extraction apparatus and the household appliance according to any one of the foregoing descriptions, where a projection apparatus of the household appliance is disposed in the fume extraction apparatus, and the household appliance is a cooktop.

Optionally, the household appliance is an electromagnetic cooker or a pneumatic-electric combination stove, and the projection apparatus is further used to project an indication sign of a placement position of a cooker. The "pneumatic-electric combination stove" may be construed as a combination cooktop having both a gas stove unit and an electromagnetic cooker unit.

It should be noted herein that the directional expression such as "above", "below" in the present invention is based on a common state for use of the household appliance unless specified otherwise.

It should be noted herein that the terms "first" and "second" in this specification are merely intended for a purpose of description, and shall not be understood as an indication of relative importance or a limit to a quantity of defined features, or a limit to a logical relationship or a sequential relationship of defined features.

The foregoing invention content of the present invention does not describe all possible implementation manners of the present invention. In the entire application, many examples are provided for instructions, and these examples may have various feasible combinations.

The following accompanying drawings are used for only exemplary descriptions and illustrations of the present technical solution, but are not intended to limit the scope of the present invention.
- FIG. 1: is a usage state reference diagram of a household appliance system according to an embodiment of the present invention;
- FIG. 2: is a visual effect diagram of a panel of an electromagnetic cooker of a household appliance system when a projection apparatus of the household appliance system is turned on according to an embodiment of the present invention; and
- FIG. 3: is a visual effect diagram of a panel of an electromagnetic cooker of a household appliance system when a projection apparatus of the household appliance system is turned off according to an embodiment of the present invention.

To make the objectives, solutions, beneficial effects of the present invention more clear, the present invention is further described below with reference to the accompanying drawings and preferred embodiments.

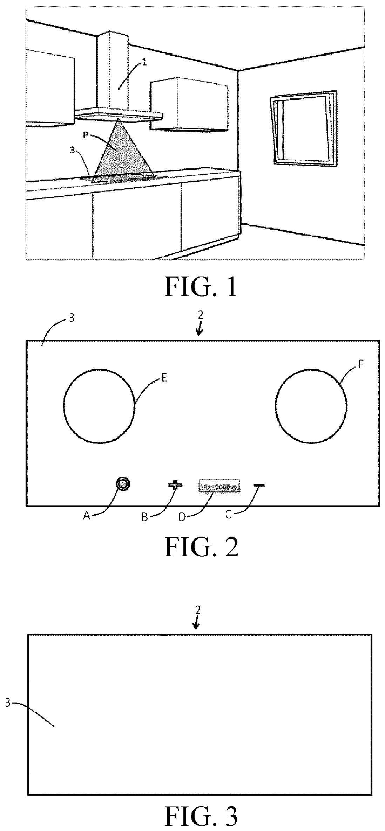

The present invention provides a household appliance system, including a fume extraction apparatus and a household appliance, where the fume extraction apparatus is a range hood 1, and the household appliance is an electromagnetic cooker 2. The range hood 1 is installed above the electromagnetic cooker 2, and as shown in FIG. 1, is used to extract and discharge oil fume, water vapor, and the like that is generated when the electromagnetic cooker 2 heats a cooker placed on the electromagnetic cooker 2.

The electromagnetic cooker 2 includes a panel 3, a left coil panel, a right coil panel, a touch control module, and a projection apparatus. The coil panels and the touch control module are all disposed below the panel 3. The touch control module includes a capacitive touch control apparatus.

The projection apparatus is disposed in the range hood. The projection apparatus is used to perform projection onto the touch control module and indicate, by using the projection, a touch control position corresponding to the touch control module. Specifically, the touch control position is on the panel 3. The projection apparatus also controls on and off of the touch control module by means of wireless communication. At the same time the projection apparatus is turned off by a user, the projection apparatus automatically turns off the touch control module, so that the touch control module enters an off state. When the touch control module is in an off state, the electromagnetic cooker makes no response even if a user touches the touch control position. At the same time the projection apparatus is turned on by a user, the projection apparatus automatically turns on the touch control module, so that the touch control module enters a working state. When the projection apparatus is turned on, if a user performs a touch control operation on the touch control position corresponding to the touch control module, the touch control module detects the touch control operation instruction, and correspondingly controls the electromagnetic cooker 2 based on the touch control operation instruction.

As shown by a shadow indicated by P in FIG. 1, the projection apparatus emits projection light towards the touch control module. Specifically, as shown in FIG. 2, the projection apparatus projects corresponding touch control patterns: a "switch" pattern A, an "increase power" pattern B, and a "reduce power" pattern C onto the touch control position on the panel 3. When the electromagnetic cooker 2 is heating a cooker (where the cooker is placed on the left coil panel and/or the right coil panel) placed on the electromagnetic cooker 2, the electromagnetic cooker 2 stops heating the cooker heat if a user touches the "switch" pattern A. When the electromagnetic cooker 2 is simultaneously heating cookers placed on the left coil panel and the right coil panel, if a user simultaneously touches the "switch" pattern A and the "increase power" pattern B, the electromagnetic cooker 2 stops heating the cooker heat placed on the left coil panel. When the electromagnetic cooker 2 is simultaneously heating cookers placed on the left coil panel and the right coil panel, if a user simultaneously touches the "switch" pattern A and the "reduce power" pattern C, the electromagnetic cooker 2 stops heating the cooker heat placed on the right coil panel. When the left coil panel of the electromagnetic cooker 2 is not working, if the user simultaneously touches the "switch" pattern A and the "increase power" pattern B, the left coil panel of the electromagnetic cooker 2 starts to work at a preset power value. When the right coil panel of the electromagnetic cooker 2 is not working, if the user simultaneously touches the "switch" pattern A and the "reduce power" pattern C, the right coil panel of the electromagnetic cooker 2 starts to work at a preset power value. The projection apparatus is further used to project display information D onto the panel 3. As shown in FIG. 2, in this case, content of the projected display information D is that a current power of the right coil panel of the electromagnetic cooker 2 is "1000W" (where a cooker placed on the right coil panel is not shown). In this case, if a user touches the "increase power" pattern B, the power of the right coil panel may increase; and if the user touches the "reduce power" pattern C, the power of the right coil panel may reduce. After the power of the right coil panel changes, the content of the projected display information D also correspondingly changes. As shown in FIG. 2, the projection apparatus is further used to project an indication sign E of a placement position of a left cooker and an indication sign F of a placement position of a right cooker onto the panel 3. The left coil panel is disposed below the indication sign E, and the right coil panel is disposed below the indication sign F.

A color and/or pattern of the touch control pattern is set to be changeable. Specifically, a user may select the color and pattern of the touch control pattern by controlling the projection apparatus. For example, the user may change "+" of the "increase power" pattern B to "increase" by controlling the projection apparatus. Certainly, the projection apparatus needs to prestore two "increase power" patterns B: "+" and "increase" for a user to select. For another example, colors of the touch control patterns may also be selected by a user. Certainly, the projection apparatus also need to prestore selects to-be-selected colors of the touch control patterns. It should be noted that any touch control pattern displayed on the panel 3 may be a touch control pattern in a single color, or may be a colorful touch control pattern in multiple colors. In addition, a color and pattern of an indication sign of a placement position of a cooker may also be set to be changeable.

The touch control module is a unique unit of the electromagnetic cooker 2 that is on the panel 3 and that is used for a user to manually control the electromagnetic cooker 2, and the touch control position of the electromagnetic cooker 2 is indicated only by using the projection. When the projection apparatus is turned off, the touch control patterns, the display information D, the indication sign E of the placement position of the left cooker, and the indication sign F of the placement position of the right cooker that are on the panel 3 all disappear. As shown in FIG. 3, the panel 3 is in single white. Specifically, the panel 3 has an integrated seamless and nonporous structure, and is made of microcrystalline glass. The microcrystalline glass is provided with white printing ink, so that the panel 3 is in single white when the projection apparatus is turned off. The foregoing is merely a preferred embodiment of the present invention, and other embodiments may be obtained by adding, deleting, modifying, or substituting some technical features. For example, the fume extraction apparatus may alternatively be a microwave oven having a fume extraction function, or another household appliance that can implement a function of extracting and discharging oil fume. For another example, the electromagnetic cooker may be replaced with a pneumatic-electric combination stove. For another example, alternatively, the projection apparatus includes a first position and a second position, and the projection apparatus may be switched between the first position and the second position by means of a pressing operation; when the projection apparatus is in the first position, the projection apparatus is embedded in a housing of the range hood and the projection apparatus is turned off; and when the projection apparatus is in the second position, the projection apparatus partially extends out of the housing of the range hood, performs projection onto the touch control module, and indicates, by using the projection, the touch control position corresponding to the touch control module. For another example, alternatively, the color and/or pattern of the touch control pattern are set to be automatically changeable. For example, when the projection apparatus detects a temperature of a cooking zone is higher than a particular value, the color of the touch control pattern is automatically set to be in a cool tone; and when the projection apparatus detects that the temperature of the cooking zone is lower than the particular value, the color of the touch control pattern is automatically set to be in a warm tone. In addition, the projection apparatus automatically controls the pattern of the touch control pattern based on a time. When the projection apparatus determines that it is currently daytime, the touch control pattern formed by the projection apparatus is a small pattern; and when the projection apparatus determines that it is currently nighttime, the touch control pattern formed by the projection apparatus is a large pattern, so that it is convenient for a user to see the touch control pattern clearly. For another example, alternatively, a color and/or pattern of an indication sign of a placement position of a cooker is set to be automatically changeable. For another example, alternatively, the panel is in single black, gold, silver-white, red, or another possible color when the projection apparatus is turned off. For another example, alternatively, the projection apparatus projects the display information onto another place other than the panel, such as a wall, a ground, or another possible place. For another example, alternatively, the capacitive touch control apparatus is replaced with a resistive touch control apparatus, an infrared touch control apparatus, a surface acoustic wave touch control apparatus, or another possible touch control apparatus. Because different touch control apparatuses have different structures, it is not required to dispose the touch control module below the panel. For another example, alternatively, a touch control pattern that is always visible (where the touch control pattern is visible regardless of whether the projection apparatus is turned on or turned off) is set on the touch control position corresponding to the touch control module. The projection apparatus is used to perform projection onto the touch control module and indicate, by using the projection, the touch control position corresponding to the touch control module. That is, the touch control pattern that has been visible becomes more eye-catching when the projection apparatus performs projection onto the touch control pattern, so that it is convenient for a user to see the touch control pattern clearly, especially when the cooking zone is dark. For another example, alternatively, the projection apparatus is installed in a cabinet. The projection apparatus is used to perform projection onto a touch control module of a household appliance located below the projection apparatus, and indicate, by using the projection, a touch control position corresponding to the touch control module. For another example, alternatively, a control switch that is always visible is set, and the control switch controls the on and off of the touch control module. In this way, the on and off of the touch control module does not need to be controlled by the projection apparatus by means of wireless communication. For another example, alternatively, the on and off of the touch control module is controlled by using a particular operation. For example, the "increase power" pattern and the "reduce power" pattern are simultaneously held over a particular period of time, to switch the touch control module between on and off states. In this way, the on and off of the touch control module does not need to be controlled by the projection apparatus by means of wireless communication. For another example, the touch control pattern may alternatively be a slider for a user to perform a touch control operation by sliding a finger.

It should be additionally noted that: the present invention should not be construed to be limited to the implementation manners described above, but to cover all possible implementation manners that are determined by the claims of the present invention with reference to the disclosure of the specification. Therefore, any simple modifications, equivalent changes, and modifications made according to the technical essence of the present invention without departing from the content of the technical solutions of the present invention shall fall within the protection scope of the technical solutions of the present invention.

### Reference numerals:

1 Range hood; 2 Electromagnetic cooker; and 3: Panel.

## Claims

1. A household appliance, comprising a projection apparatus, wherein the household appliance further comprises a touch control module for touch control operation by the user, **characterized in that** the touch control module includes a capacitive touch control apparatus, a resistive touch control apparatus, an infrared touch control apparatus or a surface acoustic wave touch control apparatus and the projection apparatus is used to perform projection onto the touch control module and indicate, by using the projection, a touch control position corresponding to the touch control module.

2. The household appliance according to claim 1, **characterized in that** the touch control position is indicated only by using the projection.

3. The household appliance according to claim 2, **characterized in that** the touch control module is a unique unit of the household appliance that is used for a user to manually control the household appliance.

4. The household appliance according to claim 1, **characterized in that** the projection apparatus is used to project a corresponding touch control pattern onto the touch control position.

5. The household appliance according to claim 4, **characterized in that** a color and/or pattern of the touch control pattern is set to be changeable.

6. The household appliance according to claim 1, **characterized in that** the projection apparatus is disposed on another household appliance.

7. The household appliance according to claim 1, **characterized in that** the projection apparatus is further used to project display information.

8. The household appliance according to claim 1, **characterized in that** the touch control module is in an off state when the projection apparatus is turned off; and the touch control module is in a working state when the projection apparatus is turned on.

9. The household appliance according to claim 1, **characterized in that** the household appliance comprises a panel (3), and the touch control position is on the panel (3); and the panel (3) is in a single color when the projection apparatus is turned off.

10. The household appliance according to claim 9, **characterized in that** the panel (3) is in single black or white.

11. The household appliance according to claim 1, **characterized in that** a color of the projection is set to be changeable.

12. The household appliance according to claim 1, **characterized in that** the projection apparatus comprises a first position and a second position, and the projection apparatus may be switched between the first position and the second position by means of a pressing operation; when the projection apparatus is in the first position, the projection apparatus is embedded in the household appliance and the projection apparatus is turned off; and when the projection apparatus is in the second position, the projection apparatus at least partially extends out of the household appliance, performs projection onto the touch control module, and indicates, by using the projection, the touch control position corresponding to the touch control module.

13. The household appliance according to any one of claims 1 to 12, **characterized in that** the household appliance comprises any one of the following: an electromagnetic cooker (2), a gas stove, a pneumatic-electric combination stove, a range hood (1), an oven, a steam oven, a dishwasher, a water heater, a coffee machine, a refrigerator, and a washing machine.

14. A household appliance system, comprising a fume extraction apparatus and the household appliance according to any one of claims 1 to 11, wherein a projection apparatus of the household appliance is disposed in the fume extraction apparatus, and the household appliance is a cooktop.

15. The household appliance system according to claim 14, **characterized in that** the household appliance is an electromagnetic cooker (2) or a pneumatic-electric combination stove, and the projection apparatus is further used to project an indication sign of a placement position of a cooker.

## Patentansprüche

1. Haushaltsgerät, das eine Projektionsvorrichtung umfasst, wobei das Haushaltsgerät ferner ein Touch-Control-Modul für die Touch-Control-Bedienung durch den Benutzer umfasst, **dadurch gekennzeichnet, dass** das Touch-Control-Modul eine kapazitive Touch-Control-Vorrichtung, eine resistive Touch-Control-Vorrichtung, eine Infrarot-Touch-Control-Vorrichtung oder eine Oberflächenwellen-Touch-Control-Vorrichtung aufweist und die Projektionsvorrichtung zum Durchführen einer Projektion auf das Touch-Control-Modul und zum Anzeigen einer dem Touch-Control-Modul entsprechenden Touch-Control-Position mithilfe der Projektion benutzt wird.

2. Haushaltsgerät nach Anspruch 1, **dadurch gekennzeichnet, dass** die Touch-Control-Position nur mithilfe der Projektion angezeigt wird.

3. Haushaltsgerät nach Anspruch 2, **dadurch gekennzeichnet, dass** es sich bei dem Touch-Control-Modul um eine eigenständige Einheit des Haushaltsgeräts handelt, die dazu dient, dass ein Benutzer das Haushaltsgerät manuell bedienen kann.

4. Haushaltsgerät nach Anspruch 1, **dadurch gekennzeichnet, dass** die Projektionsvorrichtung zum Projizieren eines entsprechenden Touch-Control-Musters auf die Touch-Control-Position dient.

5. Haushaltsgerät nach Anspruch 4, **dadurch gekennzeichnet, dass** sich eine Farbe und/oder ein Muster des Touch-Control-Musters ändern lässt.

6. Haushaltsgerät nach Anspruch 1, **dadurch gekennzeichnet, dass** die Projektionsvorrichtung an einem anderen Haushaltsgerät angeordnet ist.

7. Haushaltsgerät nach Anspruch 1, **dadurch gekennzeichnet, dass** die Projektionsvorrichtung ferner zum Projizieren von Anzeigeinformationen dient.

8. Haushaltsgerät nach Anspruch 1, **dadurch gekennzeichnet, dass** sich das Touch-Control-Modul in einem ausgeschalteten Zustand befindet, wenn die Projektionsvorrichtung ausgeschaltet ist, und sich in einem Betriebszustand befindet, wenn die Projektionsvorrichtung eingeschaltet ist.

9. Haushaltsgerät nach Anspruch 1, **dadurch gekennzeichnet, dass** das Haushaltsgerät ein Bedienfeld (3) umfasst und sich die Touch-Control-Position auf dem Bedienfeld (3) befindet und das Bedienfeld (3) eine einheitliche Farbe aufweist, wenn die Projektionsvorrichtung ausgeschaltet ist.

10. Haushaltsgerät nach Anspruch 9, **dadurch gekennzeichnet, dass** das Bedienfeld (3) einheitlich schwarz oder weiß ist.

11. Haushaltsgerät nach Anspruch 1, **dadurch gekennzeichnet, dass** sich eine Farbe der Projektion ändern lässt.

12. Haushaltsgerät nach Anspruch 1, **dadurch gekennzeichnet, dass** die Projektionsvorrichtung eine erste und eine zweite Position umfasst und durch ein Drücken zwischen der ersten und der zweiten Position wechseln kann, die Projektionsvorrichtung, wenn sie sich in der ersten Position befindet, in das Haushaltsgerät eingebettet und ausgeschaltet ist und, wenn sie sich in der zweiten Position befindet, zumindest teilweise aus dem Haushaltsgerät vorsteht, auf das Touch-Control-Modul projiziert und mithilfe der Projektion dem Touch-Control-Modul entsprechend die Touch-Control-Position angibt.

13. Haushaltsgerät nach einem der Ansprüche 1 bis 12, **dadurch gekennzeichnet, dass** es eines der folgenden Elemente umfasst: ein elektromagnetisches Kochfeld (2), einen Gasherd, einen Gas/Elektro-Kombiherd, eine Dunstabzugshaube (1), einen Backofen, einen Dampfbackofen, einen Geschirrspüler, einen Wassererhitzer, eine Kaffeemaschine, einen Kühlschrank oder eine Waschmaschine.

14. Haushaltsgerätesystem, das eine Dampfabzugsvorrichtung und das Haushaltsgerät nach einem der Ansprüche 1 bis 11 umfasst, wobei eine Projektionsvorrichtung des Haushaltsgeräts in der Dampfabzugsvorrichtung angeordnet ist und es sich bei dem Haushaltsgerät um eine Herdplatte handelt.

15. Haushaltsgerätesystem nach Anspruch 14, **dadurch gekennzeichnet, dass** es sich bei dem Haushaltsgerät um ein elektromagnetisches Kochfeld (2) oder einen Gas/Elektro-Kombiherd handelt und die Projektionsvorrichtung ferner zum Projizieren einer symbolischen Anzeige für eine Anordnungsposition eines Kochfelds dient.

## Revendications

1. Appareil électroménager, comprenant un dispositif de projection, dans lequel l'appareil électroménager comprend en outre un module de commande tactile pour une action de commande tactile par l'utilisateur,
**caractérisé en ce que** le module de commande tactile inclut un dispositif de commande tactile capacitif, un dispositif de commande tactile résistif, un dispositif de commande tactile à infrarouge ou un dispositif de commande tactile à ondes acoustiques de surface et le dispositif de projection est utilisé pour réaliser une projection sur le module de commande tactile et indiquer, à l'aide de la projection, une position de commande tactile correspondant au module de commande tactile.

2. Appareil électroménager selon la revendication 1, **caractérisé en ce que** la position de commande tactile est indiquée uniquement à l'aide de la projection.

3. Appareil électroménager selon la revendication 2, **caractérisé en ce que** le module de commande tactile est un organe exclusif de l'appareil électroménager qui est utilisé par un utilisateur pour commander manuellement l'appareil électroménager.

4. Appareil électroménager selon la revendication 1, **caractérisé en ce que** le dispositif de projection est utilisé pour projeter un motif de commande tactile correspondant sur la position de commande tactile.

5. Appareil électroménager selon la revendication 4, **caractérisé en ce qu'**une couleur et/ou un motif du motif de commande tactile est configuré pour être modifiable.

6. Appareil électroménager selon la revendication 1, **caractérisé en ce que** le dispositif de projection est disposé sur un autre appareil électroménager.

7. Appareil électroménager selon la revendication 1, **caractérisé en ce que** le dispositif de projection est utilisé en outre pour projeter des informations d'affichage.

8. Appareil électroménager selon la revendication 1, **caractérisé en ce que** le module de commande tactile est dans un état inactif lorsque le dispositif de projection est désactivé, et le module de commande tactile est dans un état de fonctionnement lorsque le dispositif de projection est activé.

9. Appareil électroménager selon la revendication 1, **caractérisé en ce que** l'appareil ménager comprend un panneau (3), et la position de commande tactile est sur le panneau (3) et le panneau (3) est dans une seule couleur lorsque le dispositif de projection est désactivé.

10. Appareil électroménager selon la revendication 9, **caractérisé en ce que** le panneau (3) est d'une couleur noire ou blanche unique.

11. Appareil électroménager selon la revendication 1, **caractérisé en ce qu'**une couleur de la projection est définie pour être modifiable.

12. Appareil électroménager selon la revendication 1, **caractérisé en ce que** le dispositif de projection comprend une première position et une deuxième position, et le dispositif de projection peut être commuté entre la première position et la deuxième position au moyen d'une action d'appui, et
lorsque le dispositif de projection est dans la première position, le dispositif de projection est incorporé dans l'appareil électroménager et le dispositif de projection est désactivé, et lorsque le dispositif de projection est dans la deuxième position, le dispositif de projection s'étend au moins en partie à l'extérieur de l'appareil électroménager, exécute une projection sur le module de commande tactile et indique, au moyen de la projection, la position de commande tactile correspondant au module de commande tactile.

13. Appareil électroménager selon l'une quelconque des revendications 1 à 12, **caractérisé en ce que** l'appareil électroménager comprend l'un des suivants : un cuiseur électromagnétique (2), une cuisinière à gaz, une cuisinière mixte pneumatique-électrique, une hotte de cuisine (1), un four, un four à vapeur, un lave-vaisselle, un chauffe-eau, une machine à café, un réfrigérateur et une machine à laver.

14. Système d'appareil électroménager, comprenant un dispositif d'extraction de vapeur et l'appareil électroménager selon l'une quelconque des revendications 1 à 11, dans lequel un dispositif de projection de l'appareil électroménager est disposé dans le dispositif d'extraction de vapeurs, et l'appareil électroménager est une table de cuisson.

15. Système d'appareil électroménager selon la revendication 14, **caractérisé en ce que** l'appareil électroménager est un cuiseur électromagnétique (2) ou une cuisinière mixte pneumatique-électrique, et le dispositif de projection est utilisé en outre pour projeter un signe d'indication d'une position de placement d'un cuiseur.
